# FASCICULE DE BREVET EUROPEEN

(11) **EP 4 423 455 B1**
(45) Date de publication et mention de la délivrance du brevet: **29.01.2025**
(21) Numéro de dépôt: 22840241.8
(22) Date de dépôt: 28.11.2022
(51) Int. Cl.: G01B 11/25, G01B 5/00, G01N 21/958

(54) **PROCÉDÉ DE MESURE PAR DÉFLECTOMÉTRIE**
DEFLEKTOMETRIEMESSVERFAHREN
DEFLECTOMETRY MEASUREMENT METHOD

(30) Priorité: 02.12.2021 FR 2112836
(43) Date de publication de la demande: 04.09.2024
(73) Titulaire: WYSE LIGHT, 42100 Saint-Etienne (FR)
(72) Inventeur: SURREL, Yves, 42100 SAINT-ETIENNE (FR)
(74) Mandataire: Cabinet Laurent & Charras
(86) Numéro de dépôt international: PCT/FR2022/052187
(87) Numéro de publication internationale: WO 2023/099836

(56) Documents cités:
- DE-A1- 10 127 304
- US-A1- 2005 238 237
- US-A1- 2008 030 744
- PETZ MARCUS ET AL: "Three-dimensional shape measurement of aspheric refractive optics by pattern transmission photogrammetry", ALGORITHMS AND TECHNOLOGIES FOR MULTISPECTRAL, HYPERSPECTRAL, AND ULTRASPECTRAL IMAGERY XIX - PROCEEDINGS OF SPIE, vol. 7239, 18 January 2009 (2009-01-18), US, pages 723906, XP055944239, ISSN: 0277-786X, ISBN: 978-1-5106-4548-6, DOI: 10.1117/12.810530
- MARCUS PETZ ET AL: "Measurement of optically effective surfaces by imaging of gratings", SPIE PROCEEDINGS, vol. 5144, 28 May 2003 (2003-05-28), US, pages 288, XP055677715, ISBN: 978-1-5106-3673-6, DOI: 10.1117/12.500601

## Description

### Domaine technique

L'invention se rapporte au domaine technique des instruments de mesure optique, et en particulier au domaine des déflectomètres.

### Art antérieur

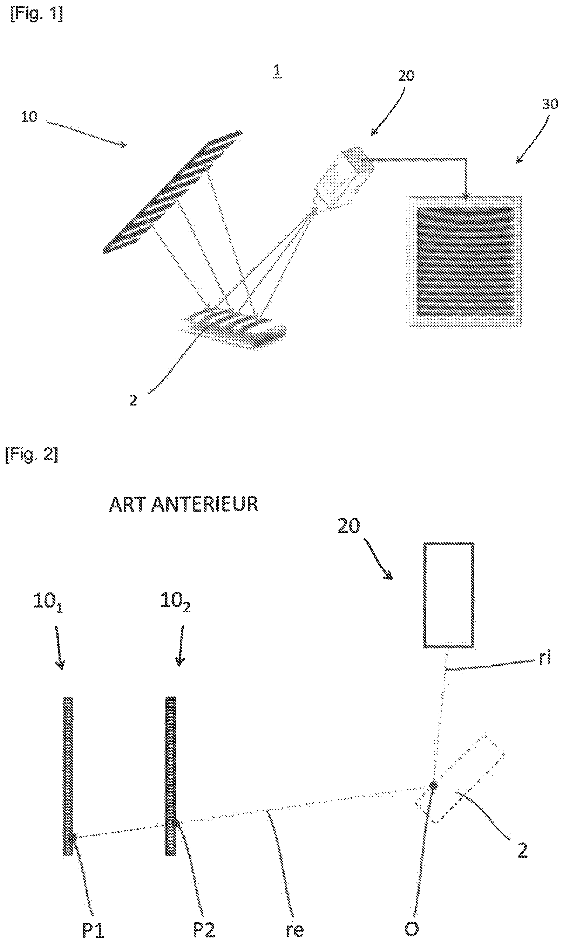

Il est connu de l'art antérieur d'utiliser la déflectométrie comme moyen de mesure de défauts de forme. En référence à la figure 1 de la présente demande, en affichant des franges sur un afficheur (10), il est possible d'observer le reflet de ces franges, produit par un objet réfléchissant (2) à mesurer. En constatant la déformation des franges réfléchies, on peut en déduire la présence de défauts de forme sur la surface réfléchissante de l'objet (2) mesuré.

L'inconvénient de cette méthode, est qu'elle ne permet pas de mesurer la forme de l'objet en tant que telle, mais uniquement les défauts de la forme de l'objet. En effet, les pentes de la surface, qui induisent une déformation des franges projetées, ne sont mesurables quantitativement que si l'on connaît déjà la forme de la surface. L'état de l'art consiste à considérer que l'objet est approximativement plan pour estimer les pentes. Par ailleurs, le calcul d'une forme à partir des pentes nécessite une étape de calcul par intégration, qui dépend d'une constante arbitraire. L'évaluation des pentes par cette méthode approximative fournit donc une infinité de solutions pour la forme de l'objet.

Bien que les défauts détectés par ce procédé puissent être de dimension très petite, souvent bien inférieurs au micromètre, la mesure de la forme n'est pas quantitative. La mesure est seulement qualitative, puisque seuls les défauts de la forme sont obtenus.

Une amélioration connue de ce procédé permet d'utiliser la déflectométrie comme moyen de mesure semi-quantitatif. Dans ce cas, le procédé de mesure utilise des données d'entrée supplémentaires, telles que les distances entre la caméra, l'objet et l'afficheur, et les angles d'orientation mutuels. La constante d'intégration peut alors être déterminée, ce qui permet à la mesure de fournir la forme de l'objet. L'inconvénient est que les mesures des données d'entrée supplémentaires doivent être très minutieuses pour que le procédé fournisse des résultats satisfaisants, car ces données doivent être transformées pour qu'elles soient exprimées dans un repère unique (« dégauchissage »), ce qui nécessite de déterminer très précisément la position des appareils de mesure auxiliaires qui sont utilisés.

Ou alors, la mesure des défauts de forme est appliquée à une forme nominale connue de l'objet à mesurer, ce qui permet d'obtenir la forme réelle de l'objet mesuré. Ce procédé présente l'inconvénient de connaître nécessairement la forme théorique de l'objet à mesurer pour pouvoir obtenir sa forme réelle, ce qui induit certaines approximations dans la qualité de la mesure.

Un dernier procédé de mesure utilisant la déflectométrie consiste à faire une reconstruction géométrique de l'objet, par triangulation. Alors que dans les autres procédés de mesure, l'afficheur et la caméra sont fixes, ce procédé nécessite une mobilité de l'afficheur. En référence à la figure 2, illustrant l'art antérieur :
- en partant d'un rayon incident (ri) connu et capté par la caméra (10) ;
- puis en déterminant le chemin optique d'un rayon émis (re), définit par un premier pixel (P1) affiché par l'afficheur (10) lorsqu'il est dans une première position (10₁) et par un second pixel (P2) affiché par l'afficheur (10) lorsqu'il est dans une seconde position (10₂) ;
alors l'intersection du rayon incident (ri) et du rayon émis (re) fournit un point O de l'objet (2).

En procédant à une telle reconstruction géométrique pour chacun des rayons incidents de la caméra, il est possible d'obtenir chaque point de la surface de l'objet réfléchissant à mesurer, et donc sa forme.

Toutefois, l'inconvénient de cette méthode par triangulation est qu'elle donne des résultats dont la qualité est médiocre, la précision de la mesure étant au mieux d'une dizaine de micromètres, dans la mesure où cette méthode est basée sur le calcul d'un point d'intersection de rayons, extrêmement sensible à la moindre erreur sur la direction de propagation de ces rayons. Cette approche ne tire pas du tout parti de l'une des caractéristiques essentielles de la déflectométrie, à savoir son aspect intrinsèquement différentiel résultant de sa dépendance aux pentes de l'objet à mesurer.

Les procédés de l'art antérieur ne sont donc pas adaptés pour la mesure d'objets dont la connaissance de la forme au micromètre près est fondamentale. Pour des miroirs ou des lentilles de télescopes, par exemple, ces procédés de déflectométrie ne sont donc pas adaptés.

L'interférométrie est un autre procédé de mesure qui permet d'obtenir la forme d'un objet avec une incertitude très inférieure au micromètre, et est la méthode de référence pour la mesure de qualité de forme de miroirs optiques. Cependant, un interféromètre est un appareil onéreux, très sensible aux vibrations et qui nécessite des éléments complémentaires pour la mesure de formes autres que des plans ou des sphères. Ces éléments sont eux aussi très onéreux la plupart du temps. Il peut s'agir de pièces de compensation fabriquées sur mesure, et communément appelées selon l'anglicisme « nulls », ou encore d'hologrammes générés par ordinateur.

Un autre procédé de mesure optique est la stéréo-déflectométrie, dans lequel une caméra doit acquérir des images de l'objet à mesurer selon des configurations angulaires différentes. Cette méthode a l'inconvénient de restreindre le champ mesurable par la caméra. Une telle méthode est décrite dans les documents US2005238237A1 et « Three-dimensional shape measurement of aspheric refractive optics by pattern transmission photogrammetry », Marcus PETZ et al, Proc. SPIE 5144, DOI10.1117/12.500601.

Un dernier procédé est la mesure à l'aide d'une machine à mesurer tridimensionnelle, qui effectue des mesures spatiales à l'aide d'un palpeur, en de nombreux points de l'objet à mesurer. Ces machines sont d'une part onéreuses, et d'autre part très lentes, car la résolution spatiale de la forme mesurée est directement reliée au nombre de points mesurés. Une telle machine fonctionne de plus dans un environnement régulé, notamment en température, pour que la mesure soit correcte.

Les documents DE10127304A1 et US20080030744 A1 décrivent des déflectomètres de l'art antérieur, qui ne donnent pas entière satisfaction.

### Exposé de l'invention

Le but de l'invention est de pallier les inconvénients de l'art antérieur, en proposant un procédé de mesure simple, peu onéreux, permettant d'obtenir la forme d'un objet avec une qualité proche des procédés d'interférométrie de l'art antérieur.

Un autre but de l'invention est de concevoir un appareil de mesure configuré pour la mise en oeuvre d'un tel procédé, l'appareil devant également être simple d'utilisation et peu onéreux.

A cet effet, il a été mis au point un procédé de mesure sur un objet réfléchissant ou un objet transparent au moyen d'un déflectomètre comprenant :
- un afficheur de franges dynamiques ;
- une caméra configurée pour acquérir des images des franges réfléchies par l'objet réfléchissant et/ou des images des franges transmises à travers l'objet transparent ;
- un ordinateur configuré pour exécuter un programme afin d'effectuer la mesure à partir des images acquises par la caméra.

Selon l'invention, le procédé comprend les étapes suivantes :
- acquisitions successives des images des franges réfléchies et/ou transmises par l'objet dans au moins deux configurations d'un système optique défini par l'afficheur, l'objet et la caméra, les configurations étant obtenues par translation de la caméra le long de son axe optique ;
- à partir des images acquises, exécution du programme et calcul des solutions possibles de la forme de l'objet et de la position de l'objet au sein du système optique défini par l'afficheur, l'objet et la caméra, dans chacune des configurations ;
- obtention d'une solution finale de la forme et de la position de l'objet par identification d'une unique solution commune aux solutions possibles préalablement calculées.

Les mesures effectuées dans chacune des configurations fournissent une infinité de solutions, à cause des constantes d'intégration inconnues. Parmi toutes ces solutions possibles, une seule est la solution réelle, dite « solution finale ». La comparaison des solutions possibles dans les différentes configurations élimine les solutions incohérentes, car une seule solution est commune aux deux configurations : la forme de l'objet est ainsi obtenue, ainsi que sa position au sein du système optique.

De cette manière, le procédé permet d'obtenir la forme de l'objet, et pas uniquement ses défauts de forme. Le procédé n'utilise pas de données d'entrées supplémentaires. Il est donc possible d'obtenir la mesure de l'objet à partir de l'objet seul : le procédé est simplifié et les erreurs d'approximation sont donc évitées.

Le procédé utilisant la réflexion des franges, et par là les pentes de la forme à mesurer, l'incertitude sur la mesure est comparable à celle d'une mesure obtenue par interférométrie.

Dans un mode de réalisation, le procédé comprend une étape d'étalonnage du déflectomètre par acquisitions successives des images des franges dans au moins deux configurations, et de préférence au moins trois, d'un système optique défini par l'afficheur positionné directement face à la caméra. Ce mode d'étalonnage est simple et permet de garantir la fiabilité et la performance du procédé. L'étalonnage, ne faisant intervenir que l'afficheur et la caméra, permet d'identifier correctement la trajectoire de chaque rayon incident de la caméra et la forme réelle de l'afficheur, en vue des mesures ultérieures.

Afin que le procédé soit compatible avec la mesure d'un objet réfléchissant, une étape supplémentaire est nécessaire. Elle consiste à déplacer la caméra de manière qu'elle ne soit plus alignée avec l'afficheur, et à disposer un miroir de référence de manière à réfléchir les projections de l'afficheur en direction de la caméra.

Pour vérifier le bon fonctionnement du déflectomètre à la fin de son étalonnage, la mesure du miroir de référence est préalablement obtenue par un autre moyen tel qu'un interféromètre, et l'étape d'étalonnage comprend une étape supplémentaire consistant à mesurer le miroir de référence au moyen du déflectomètre, et comparer la mesure obtenue par le déflectomètre avec la mesure préalable.

L'invention concerne également un déflectomètre pour effectuer une mesure sur un objet réfléchissant ou un objet transparent comprenant :
- un afficheur de franges dynamiques ;
- une caméra configurée pour acquérir des images des franges réfléchies par l'objet réfléchissant et/ou des images des franges transmises à travers l'objet transparent ;
- un ordinateur configuré pour exécuter un programme afin d'effectuer la mesure à partir des images acquises par la caméra.

Selon l'invention, la caméra est montée sur un bâti avec capacité de déplacement entre au moins deux positions, afin que la caméra capte des images selon au moins deux configurations d'un système optique défini par l'afficheur, l'objet et la caméra ;
et la mesure de l'objet est un calcul de sa forme, le programme d'ordinateur est configuré pour calculer la géométrie de l'objet uniquement à partir des images acquises par la caméra dans les au moins deux configurations, et le calcul est fait par intégration des pentes mesurées dans chaque configuration.

De cette manière, le déflectomètre intègre des composants peu onéreux.

Enfin, un tel déflectomètre ne nécessite pas d'utiliser des donnés d'entrées supplémentaires, et est donc simple d'utilisation : il suffit de disposer l'objet à mesurer au sein du système optique défini par l'afficheur, l'objet et la caméra pour pouvoir effectuer la mesure. Il n'y a pas d'étape contraignante de positionnement précis ou d'alignement de l'objet ou d'un autre élément.

Afin de garantir la répétabilité du positionnement de l'afficheur et/ou de la caméra dans chaque configuration, ils sont montés sur le bâti par une liaison isostatique, ce qui signifie que cette liaison ne crée aucune déformation des structures mécaniques concernées, qui seraient source d'erreurs de mesure. De plus, un montage isostatique peut être moins onéreux que des systèmes mécaniques de précision, tels qu'une vis de précision.

Pour faciliter le déplacement de l'afficheur et/ou de la caméra, celui-ci est assuré par un système à deux étages comprenant un premier étage déplaçable par rapport au bâti, et transportant un second étage sur lequel est fixé l'afficheur et/ou la caméra ; le second étage est escamotable entre :
- une position libre dans laquelle il n'entrave pas le déplacement du premier étage par rapport au bâti, et
- une position indexée dans laquelle il entrave le déplacement du premier étage, et est en liaison isostatique avec le bâti.
L'opérateur n'a donc pas besoin de porter l'afficheur et/ou la caméra pour les déplacer d'une configuration à une autre.

Dans un mode de réalisation préféré, la liaison isostatique est du type liaison de Boys, car cette liaison est simple à mettre en oeuvre.

Dans ce mode, la liaison de Boys est réalisée par trois pions à portion sphérique positionnés en triangle au niveau d'une face inférieure du second étage en regard avec le bâti, chacun destiné à venir en appui entre deux faces internes d'un Vé positionné de manière antagoniste au niveau d'une face supérieure du bâti.

Afin de simplifier la construction mécanique des liaisons cinématiques, l'afficheur et/ou la caméra sont déplaçables le long d'un axe rectiligne.

Toujours dans un but de faciliter l'utilisation du déflectomètre, le déplacement de l'afficheur et/ou de la caméra est assuré par :
- une liaison glissière horizontale motorisée assurant le déplacement du premier étage par rapport au bâti ;
- une liaison glissière verticale motorisée permettant d'escamoter le second étage entre la position libre et la position indexée, et la liaison glissière verticale est avec jeu.

Dans un but d'automatisation de la mesure, les moteurs des liaisons glissières horizontale et verticale sont reliés à l'ordinateur, et le programme d'ordinateur est configuré pour piloter automatiquement les moteurs pour déplacer l'afficheur et/ou la caméra entre les positions.

### Brève description des dessins

[Fig.1] est un schéma illustrant le principe de la déflectométrie.
[Fig.2] est un schéma illustrant un procédé de déflectométrie de l'art antérieur.
[Fig.3] est un schéma illustrant l'étalonnage du procédé selon l'invention.
[Fig.4] est un schéma illustrant le procédé selon l'invention lors de la mesure d'un objet transparent.
[Fig.5] est un schéma illustrant une autre étape d'étalonnage du procédé.
[Fig.6] est un schéma illustrant la multiplicité de solutions obtenues lors d'une mesure dans une première configuration.
[Fig.7] est un autre schéma illustrant plusieurs solutions obtenues à la suite d'une mesure dans la première configuration.
[Fig.8] est un schéma illustrant la multiplicité de solutions obtenues lors de la mesure dans une seconde configuration.
[Fig.9] est un schéma illustrant la comparaison de solutions obtenues dans la première et la seconde configuration.
[Fig. 10] est un schéma d'une caméra d'un déflectomètre selon l'invention.
[Fig.11] est un schéma d'un afficheur d'un déflectomètre selon l'invention.
[Fig.12] est un schéma d'une liaison de Boys.
[Fig.13] est un schéma d'une autre liaison de Boys.
[Fig.14] est un schéma illustrant un système à deux étages transportant l'afficheur et/ou la caméra.
[Fig.15] est un autre schéma illustrant le système à deux étages.
[Fig.16] est un schéma illustrant des berceaux de positionnement de l'afficheur.
[Fig.17] est un schéma illustrant la mesure d'un objet par stéréo-déflectométrie.
[Fig.18] est un schéma illustrant la mesure du même objet selon un mode de l'invention.

### Description détaillée de l'invention

En référence à la figure 1, la déflectométrie est une méthode de mesure d'un objet (2), mettant en oeuvre un déflectomètre (1) comprenant un afficheur (10) projetant des franges, et dont la réflexion par l'objet (2) est acquise par une caméra (20). Les franges affichées sont un motif sinusoïdal dynamique prédéterminé. Ce motif sinusoïdal prédéterminé permet de savoir, pour chaque pixel capté par la caméra (20), de quel pixel il provient sur l'afficheur (10). Cela correspond à l'état de l'art largement connu sous le nom de mesure par décalage de phase.

Le motif réfléchi étant déformé par la forme réelle de l'objet (2), un ordinateur (30) interprète les déformations des franges réfléchies afin de déterminer, par calcul, la forme de l'objet (2).

Par forme de l'objet (2) on entend sa géométrie, ses dimensions, et la mesure de ses défauts de forme jusqu'à une échelle de l'ordre du micromètre. Le déflectomètre (1) selon l'invention permet également d'obtenir la position de l'objet (2) au sein du système optique défini par l'afficheur (10), l'objet (2) et la caméra (20).

La figure 1 illustre un cas typique de mesure par déflectométrie où l'objet (2) est réfléchissant : dans ce cas, la mesure consiste à obtenir la forme de la surface réfléchissante de l'objet (2). Mais il est également envisageable de procéder à la mesure d'un objet (2) transparent, auquel cas la mesure consiste à obtenir la forme globale de l'objet (2), pas uniquement la forme d'une de ses surfaces.

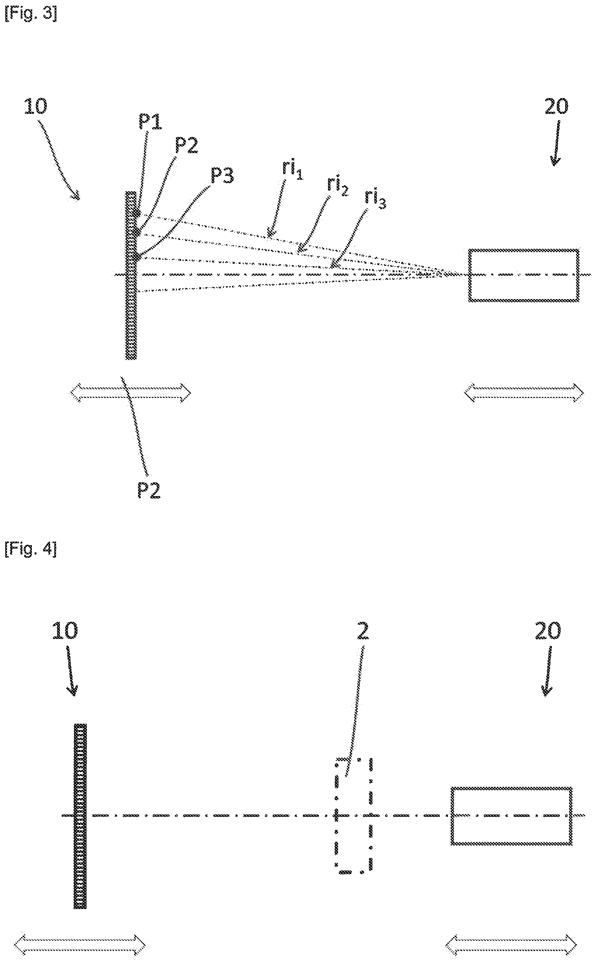

En référence à la figure 3, une étape d'étalonnage du procédé consiste à placer la caméra (20) directement en face de l'afficheur (10). Lors de cette étape, l'afficheur (10) et/ou la caméra (20) sont déplacés dans plusieurs configurations, et une acquisition des franges affichées est effectuée à chaque fois.

Cette étape d'étalonnage permet de connaître parfaitement la forme de l'afficheur et les chemins optiques des rayons incidents (ri) à la caméra (20), provenant de l'afficheur (10), dans chacune des configurations. C'est-à-dire qu'à partir de chaque pixel de l'afficheur, on détermine la trajectoire du rayon incident (ri) le reliant à la caméra (20). On a représenté trois rayons (ri₁, ri₂, ri₃) correspondant à trois pixels (P1, P2, P3).

Cette étape permet également de connaître le déplacement qui a été effectué au sein du système entre chaque configuration : la comparaison des images acquises par la caméra (20) entre chaque configuration permet, via les calculs effectués par un programme de l'ordinateur (30), de déterminer quelle transformation affine permet de passer d'une configuration à une autre. Ces transformations affines seront utilisées lors des étapes ultérieures de mesure de l'objet (2). Une transformation affine est la composition d'une translation et d'une rotation, qui décrit complètement le déplacement d'un solide rigide.

La connaissance précise de la trajectoire de ces rayons incidents (ri) est nécessaire pour la qualité des mesures ultérieures, aussi l'amplitude des déplacements entre les différentes configurations doit être la plus grande possible. En effet, plus l'amplitude est élevée, plus la trajectoire des rayons incidents (ri) passant par les toutes les positions est déterminée de manière précise, toutefois il est important de ne pas concevoir un déflectomètre (1) démesuré. Une amplitude totale du déplacement de l'ordre de 2 mètres est un compromis raisonnable entre encombrement du système et qualité de l'étalonnage.

Cette étape d'étalonnage permet d'obtenir les équations de tous les rayons incidents (ri) à la caméra (20) dans le repère du système optique, avec une exactitude latérale de l'ordre du micromètre, et angulaire de l'ordre du microradian.

Cette étape d'étalonnage permet également de mesurer les défauts de planéité de l'afficheur, ce qui permettra d'améliorer les mesures ultérieures de la forme d'objets réfléchissants en utilisant cet afficheur (20) : il est donc possible d'utiliser un afficheur (20) standard, du commerce, ce qui est un avantage économique. Il s'agit par exemple d'un moniteur pour ordinateur ou d'une télévision ordinaire.

L'étalonnage doit être réalisé périodiquement, mais il n'est pas nécessaire de refaire l'étalonnage avant de procéder à la mesure de chaque nouvel objet (2). En effet, la stabilité de l'étalonnage ne dépend que de la géométrie de structures mécaniques rigides, qui ne dépend que de la température et éventuellement du fluage de matières plastiques pouvant principalement intervenir dans la fabrication de l'afficheur et de l'objectif de la caméra.

En référence à la figure 4, une fois l'étape d'étalonnage effectuée, il est possible de procéder à la mesure d'un objet (2) transparent, en le disposant entre l'afficheur (10) et la caméra (20).

En revanche, si l'objet (2) à mesurer est réfléchissant, il faut modifier la disposition du système de manière que les franges réfléchies par l'objet (2) soient observables par la caméra (20).

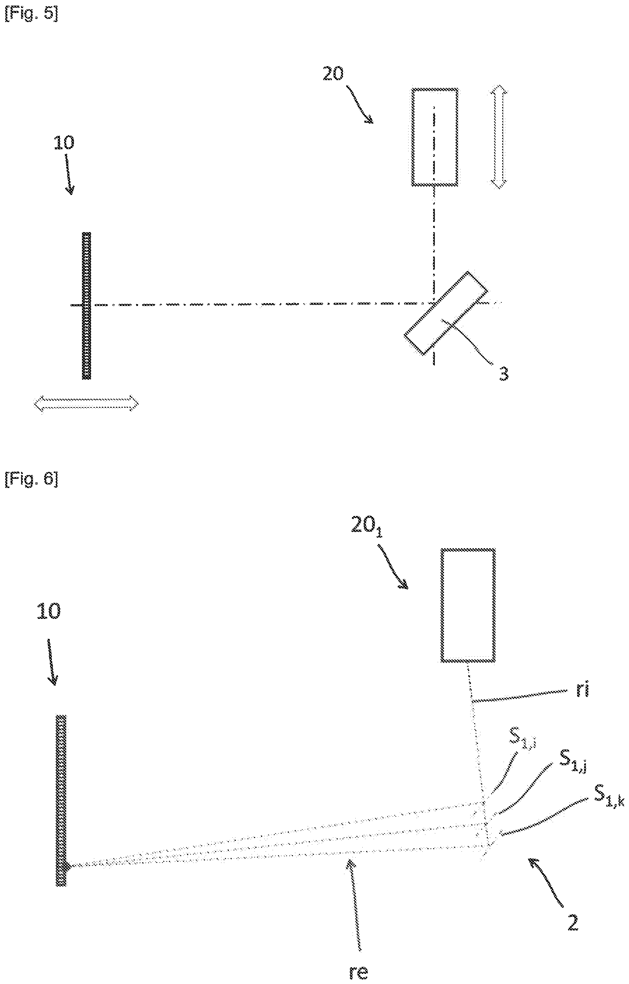

En référence à la figure 5, on déplace donc soit l'afficheur (10), soit la caméra (20), et on dispose un miroir de référence (3) de telle manière que la caméra (20) puisse avoir dans son champ l'image de l'afficheur (10) réalisée par le miroir (3).

Puisqu'on a déplacé la caméra (20) par rapport à l'afficheur (10), on a appliqué une nouvelle transformation affine au sein du système optique. Pour pouvoir l'identifier précisément, sans que l'utilisation du miroir de référence (3) n'introduise de nouvelle inconnue dans le système optique, le miroir de référence (3) est préalablement connu. C'est-à-dire que sa forme exacte a été mesurée, par exemple par interférométrie ou à l'aide d'un autre déflectomètre déjà étalonné.

La transformation affine correspondant au déplacement de la caméra (20) par rapport à l'afficheur (10) peut être déterminé à partir d'acquisitions d'images de franges de l'afficheur (10) lorsque le miroir de référence (3) est dans au moins trois positions différentes arbitraires permettant à la caméra (20) d'avoir ces franges dans son champ. Il n'y a pas de contrainte sur la qualité ou la répétabilité du positionnement du miroir de référence (20) dans cette étape. C'est un positionnement lâche.

En référence à la figure 6, on retire ensuite le miroir de référence (3), et l'on positionne l'objet (2) de telle manière que la caméra (20) ait les franges vues par réflexion dans son champ. La caméra (20) acquiert une première fois les franges réfléchies, dans une première configuration où la caméra (20) est dans une première position (20₁).

Puisque l'affichage des franges est un motif prédéterminé et que les rayons incidents (ri) à la caméra (20) ont tous été identifiés lors de l'étape d'étalonnage, on connaît, pour chaque rayon incident (ri), son point de départ depuis l'afficheur (10). L'inconnue est la forme et la position de l'objet (2) ayant permis sa réflexion en direction de la caméra (20).

Le programme de l'ordinateur (30) est programmé pour effectuer les calculs permettant d'identifier les solutions possibles de la forme et de la position de l'objet (2). Comme expliqué, pour chaque configuration du système optique défini par l'afficheur (10), l'objet (2) et la caméra (20), une infinité de solutions sont possibles. On a représenté figure 6 trois solutions de la première configuration (S_{1,i}, S_{1,j}, S_{1,k}), chacune pouvant correspondre à un rayon émis (re) différent et à une pente et une position différente de la surface de l'objet (2).

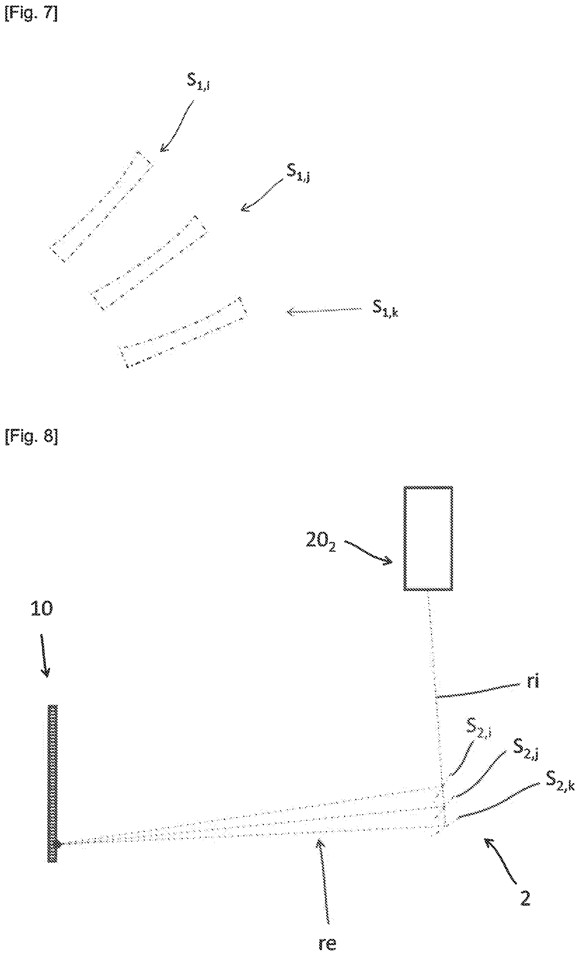

La même détermination est effectuée pour chaque rayon incident (ri) à la caméra (20), ce qui permet d'obtenir la forme complète de l'objet (2), tel que représenté sur la figure 7.

La figure 7 schématise la multiplicité de solutions en forme et en position dans l'espace qui sont obtenues par la mesure dans la première configuration.

En référence à la figure 8, la caméra (20) a été déplacée et se trouve dans une seconde position (20₂). Une nouvelle acquisition est faite dans cette seconde configuration du système optique.

De manière analogue, la connaissance des rayons incidents (ri) et de leurs points de départ depuis l'afficheur (10) permet d'obtenir une multiplicité de solutions de la seconde configuration. Afin de faciliter la lecture de la figure 8, seules des portions des trois solutions de la seconde configuration (S_{2,i}, S_{2,j}, S_{2,k}) sont représentées.

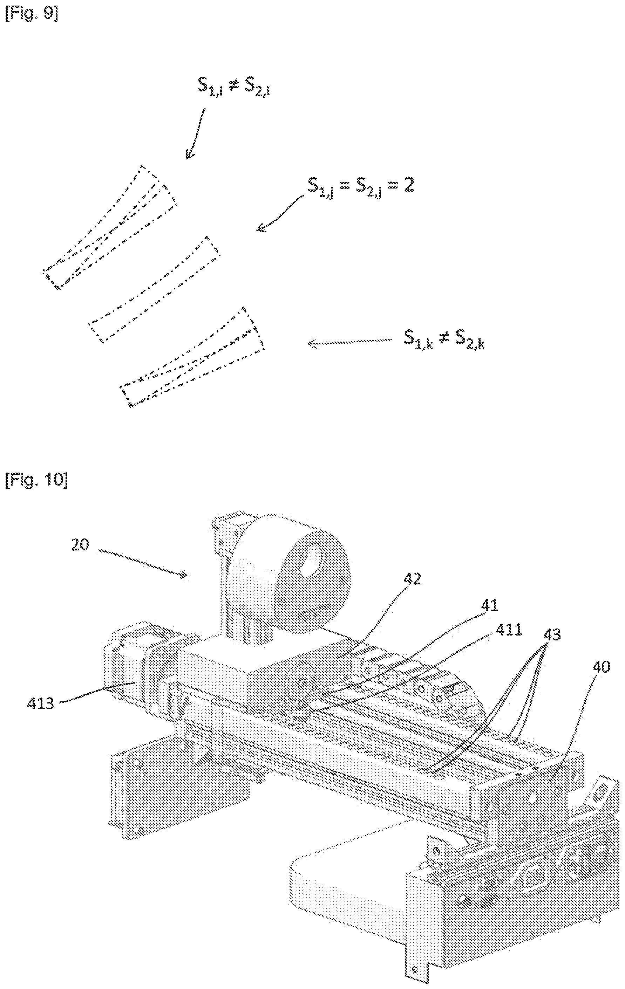

En référence à la figure 9, la dernière étape du procédé selon l'invention est de comparer les jeux de solutions obtenus dans chaque configuration, afin de déterminer quelle est la seule solution qui soit commune à chaque configuration : cette solution correspond à la forme réelle et à la position de l'objet (2) à mesurer.

Afin d'améliorer la précision de la mesure, il est avantageux de faire des mesures dans plus de deux configurations. Les incertitudes de mesure sont alors fortement diminuées par les procédures de minimisation dites « aux moindres carrés » qui sont utilisées.

L'invention concerne également un déflectomètre (1) conçu pour mettre en oeuvre le procédé décrit ci-avant.

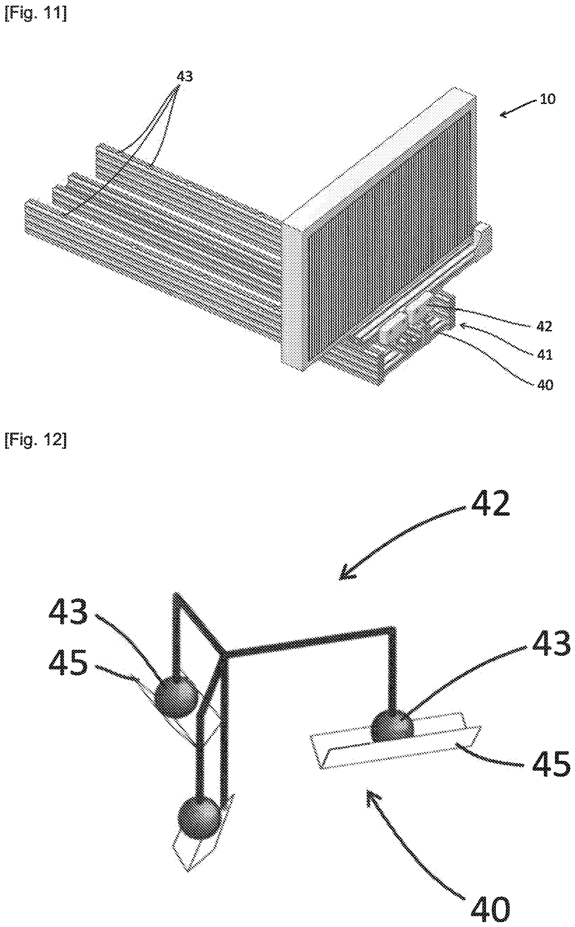

En référence aux figures 10 et 11, un tel déflectomètre (1) comprend un afficheur (10) et une caméra (20). Au moins la caméra (20), et de préférence la caméra et l'afficheur, est montée mobile par rapport à un bâti (40). Il faut qu'au moins la caméra (20) soit mobile pour que le système optique puisse être monté dans deux configurations différentes.

Que l'afficheur (10) ainsi que la caméra (20) soient mobiles permet de multiplier le nombre de configurations différentes, et de s'adapter plus facilement à différentes formes d'objets (2) à mesurer. Il est ainsi possible de mesurer avec un même déflectomètre (1) des miroirs concaves et des miroirs convexes.

Le bâti (40) est de préférence en deux parties afin de pouvoir passer facilement d'une position où l'afficheur (10) et la caméra (20) sont alignés pour l'étape d'étalonnage, à une position déportée où l'afficheur (10) et la caméra (20) sont déportés pour l'étape de mesure d'un objet (2) réfléchissant.

Dans un but de simplicité, la mobilité de l'afficheur (10) et/ou de la caméra (20) est une translation axiale le long d'un axe optique de la caméra (20). La mesure effectuée est donc une déflectométrie coaxiale. Dans le mode de réalisation illustré, cette mobilité est obtenue au moyen d'un système à deux étages : un premier étage (41) est monté en liaison glissière par rapport au bâti (40). Cette liaison glissière peut être de tout type adapté, un moyen économique est l'utilisation de profilés coopérant avec des galets (411) de forme complémentaire.

Avantageusement, cette mobilité est motorisée, par exemple au moyen d'un moteur (413) entraînant un système de poulies et de courroies ou une vis sans fin.

Le premier étage (41) embarque un second étage (42), qui est escamotable entre :
- une position libre dans laquelle il n'entrave pas le déplacement du premier étage (41) par rapport au bâti (40) ; et
- une position indexée dans laquelle il entrave le déplacement du premier étage (41), et le second étage (42) est alors en liaison isostatique avec le bâti (40) ;
et c'est le second étage (42) porte l'afficheur (10) ou la caméra (20).

La liaison entre le premier étage (41) et le second étage (42) n'est pas une liaison glissière au sens strict, car le positionnement du second étage (42) doit être libre par rapport au premier étage (41). Il s'agit donc d'une liaison cinématique incomplète, avec beaucoup de jeu.

En effet, en position indexée, le second étage (42) est en liaison isostatique avec le bâti (40) de manière que la position indexée soit toujours répétable, identique au micromètre près à chaque fois que le second étage (42) passe de la position libre à la position indexée. Si le premier étage (41) empêche le second étage (42) de se positionner sans contrainte sur le bâti (40), alors la configuration du système optique n'est pas exactement répétable et la mesure sera obérée.

Effectuer un déplacement de l'afficheur et/ou de la caméra selon une translation axiale (principe de déflectométrie coaxiale) permet de mesurer des objets de plus grandes dimensions que si la mesure de l'objet se faisait selon des angles différents (principe de la stéréo-déflectométrie).

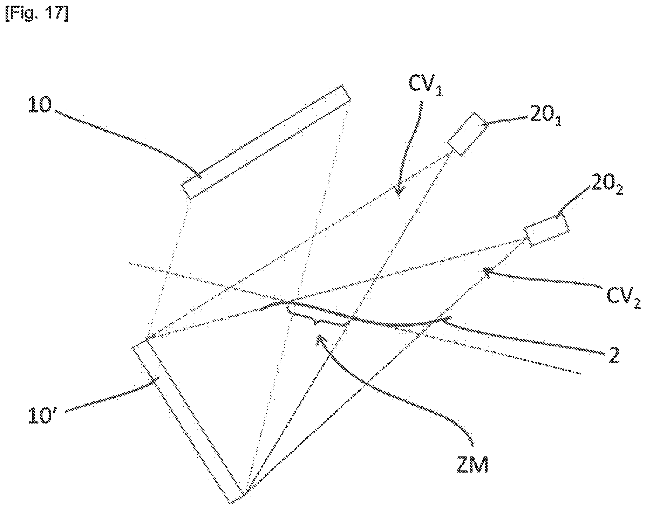

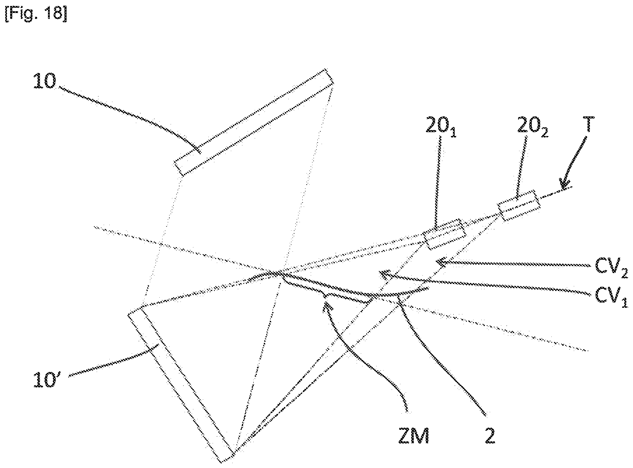

En référence aux figures 17 et 18, on a illustré la mesure d'un même objet (2) réfléchissant, selon une méthode de stéréo-déflectométrie sur la figure 17, et selon un mode de réalisation de l'invention sur la figure 18.

Sur ces figures, une caméra (20) est déplacée selon deux positions. La zone mesurable (ZM) est à l'intersection des champs de vision (CV₁, CV₂) de chaque caméra (20₁, 20₂). Afin de simplifier la construction géométrique des figures, on a représenté un afficheur miroir (10'), qui est l'image de l'afficheur (10) telle que vue par la caméra (20). Il s'agit d'une symétrie plane de l'afficheur (10) par rapport à un plan tangent localement à l'objet (2).

Avec le procédé de stéréo-déflectométrie illustré figure 17, pour obtenir une mesure exploitable, la zone doit être mesurée selon plusieurs configurations angulaires. La zone mesurable (ZM) est de superficie restreinte. De plus, l'effet stéréoscopique, donc la sensibilité de la mesure, augmente avec l'écart angulaire des observations, mais restreint de manière concomitante la zone mesurable (ZM). C'est un inconvénient grave de la stéréo-déflectométrie, qui est levé par le mode de réalisation illustré figure 18.

En référence à la figure 18, la caméra (20) est désormais déplacée selon une translation d'axe (T), sans changer le point de vue de la caméra (20). On constate que la zone mesurable (ZM), à l'intersection des champs de vision (CV₁, CV₂) de chaque caméra (20₁, 20₂), est beaucoup plus grande. Le procédé selon lequel la trajectoire de déplacement de l'afficheur et/ou de la caméra est une translation axiale permet donc de mesurer des objets de plus grandes dimensions.

Afin de réaliser la liaison isostatique entre le bâti (40) et le second étage (42), plusieurs solutions sont envisageables.

En référence à la figure 12, le second étage (42) peut comporter trois éléments de forme sphérique (43), tels que des pions ou des vis à tête bombées, venant en appui par simple gravité à l'encontre de faces internes de Vés (45), c'est-à-dire des cales en forme de « V », qui sont disposés sur le bâti (40). Pour que la liaison de Boys fonctionne, il faut que les Vés (45) ne soient pas parallèles entre eux, et de préférence les axes des Vés (45) sont concourants en un point central de la liaison. De manière équivalente, les éléments de forme sphérique (43) peuvent être positionnés sur le premier étage (41) et les Vés (45) sur le second étage (42).

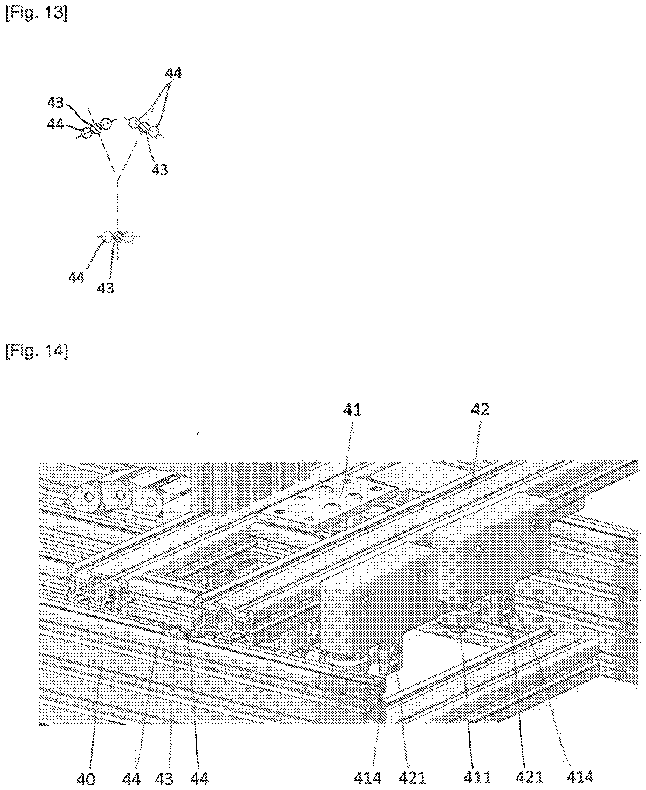

En référence aux figures 13 à 15, une autre solution est de remplacer chaque Vé (45) par une paire de butées (44), à portion sphérique.

Les deux montages sont équivalents d'un point de vue cinématique, mais l'utilisation de Vés (45) permet une plus grande latitude d'écart de positions lors de l'accostage du second étage (42) sur le bâti (40), ce qui simplifie la conception de la liaison glissière avec jeu reliant second étage (42) au premier étage (41).

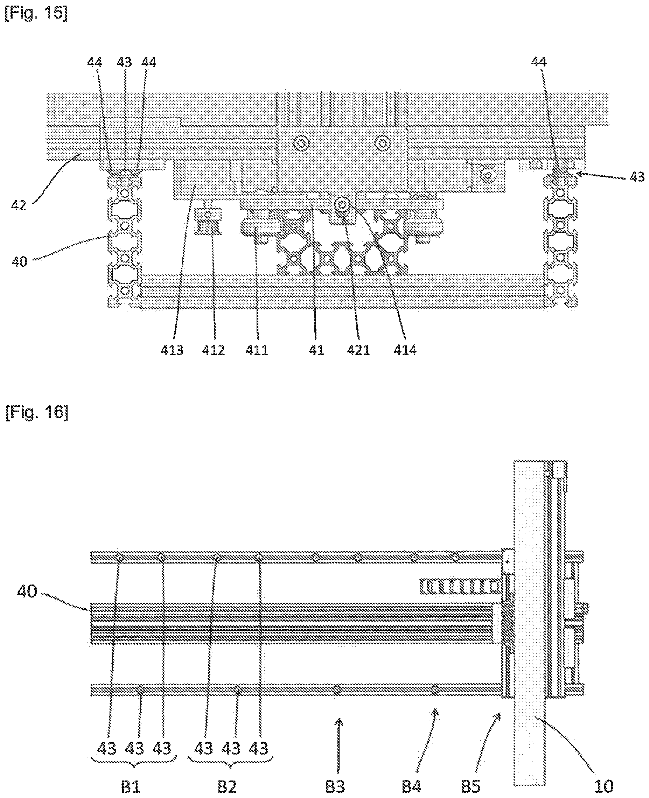

En référence aux figures 14 et 15, on voit plus en détail la liaison libre entre le premier étage (41) et le second étage (42). La liaison libre du mode préféré prend la forme d'axes (414) fixés sur le premier étage (41), et insérés dans des orifices oblongs (421) du second étage (42). Il y a un jeu important entre les axes (414) et les orifices (421), compris entre 1 mm et 5 mm.

Les orifices oblongs (421) sont orientés de manière verticale, et leur longueur est suffisante pour pouvoir dégager les Vés (45) ou les butées sphériques (44) des pions (43), désolidarisant ainsi la liaison isostatique du mode préféré, puisqu'elle est normalement maintenue par gravité.

Le passage de la position indexée à la position libre est de préférence motorisé, et peut être obtenu au moyen d'un vérin ou d'un excentrique monté sur le premier étage (41), permettant de soulever le second étage (42).

Bien entendu, la cinématique et la motorisation de l'escamotage entre la position libre et la position indexée peuvent être adaptées si la liaison isostatique est d'une construction différente, par exemple du type « point trait plan ».

En référence à la figure 16, le bâti (40) comprend plusieurs berceaux (B1-B5) chacun configurés pour recevoir de manière isostatique le second étage (42). Dans le mode illustré, chaque berceau (B1-B5) comprend donc trois pions (43).

Dans ce mode, l'afficheur (10) est mobile entre plusieurs berceaux (B1-B5) distribués sur une longueur d'environ 2 m. La longueur importante permet d'obtenir la trajectoire des rayons incidents (ri) avec une précision importante.

La caméra (20) quant à elle est mobile entre plusieurs berceaux distribués sur une longueur d'environ 25 cm. Cette longueur est suffisante pour que les configurations utilisées lors de l'étape de mesure soient suffisamment différentes, et que le procédé détermine la forme de l'objet (2) avec la précision attendue. Au surplus, cette longueur est suffisamment faible pour que la partie du bâti (40) qui porte la caméra (20) soit peu encombrante, ce qui permet de faciliter le passage de la position alignée utilisée pour l'étalonnage, à la position déportée utilisée pour la mesure d'un objet (2) réfléchissant.

Dans le mode de réalisation préféré, l'afficheur (10) et la caméra (20) peuvent donc passer d'une configuration à une autre du système optique :
- de manière répétable, au micromètre près, car l'indexage est réalisé par une liaison isostatique ne déformant pas les pièces par l'introduction d'efforts indus ;
- de manière assistée, car la mobilité et l'escamotage sont motorisés ;
- le système étant beaucoup moins onéreux que les solutions de l'art antérieur, car il n'utilise pas de systèmes mécaniques de précision, tels que des tables micrométriques ou des vis à billes de précision.

De préférence, le programme de l'ordinateur (30) est programmé pour que chaque étape du procédé soit automatisée, et le programme comprend les instructions pour :
- effectuer les mesures dans une configuration ;
- escamoter la caméra (20) et optionnellement l'afficheur dans la position libre ;
- déplacer la caméra (20) et optionnellement l'afficheur afin de l'amener à la position indexée suivante ;
- déposer la caméra (20) et optionnellement l'afficheur dans le berceau suivant ;
- effectuer les mesures dans la nouvelle configuration ;
- et ainsi de suite jusqu'à ce que toutes les mesures voulues soient effectuées ;
- puis déterminer la mesure de l'objet (2) par comparaison des solutions possibles de chacune des configurations.

Bien entendu, les éventuels réglages de la caméra (20), tels qu'un diaphragme ou l'ouverture d'un objectif sont motorisés et connectés à l'ordinateur (30) et sont également gérés par le programme. L'automatisation du déflectomètre (1) en est encore améliorée.

Il en est de même pour le déplacement du miroir de référence (3) dans au moins trois positions différentes arbitraires, lors de l'étape d'étalonnage.

Le déflectomètre (1) et le procédé selon l'invention permettent d'effectuer des mesures de formes et de dimensions sur des objets (2), en n'utilisant pour cela qu'un afficheur (10) et une caméra (20), sans autre donnée d'entrée supplémentaire. Le déflectomètre (1) peut être utilisable dans des environnements non spécifiquement prévus pour de la métrologie et, du fait de son insensibilité aux vibrations, ne nécessite pas d'être positionné sur une table d'optique. Les mesures effectuées sont d'une qualité métrologique comparable aux interféromètres et adaptée aux contrôles de pièces pour l'imagerie optique, alors que les moyens mis en oeuvre sont peu onéreux.

Le procédé et le déflectomètre (1) peuvent être conformés différemment des exemples et des illustrations donnés sans sortir du cadre de l'invention, qui est défini par les revendications.

Dans un mode non représenté, seule la caméra (20) est mobile entre plusieurs configurations, afin de faire des économies de matériel.

En particulier, la caméra (20) est moins lourde et moins encombrante à déplacer que l'afficheur. Dans un mode de réalisation, c'est donc uniquement la caméra (20) qui est mobile.

En outre, les caractéristiques techniques des différents modes de réalisation et variantes mentionnés ci-dessus peuvent être, en totalité ou pour certaines d'entre elles, combinées entre elles. Ainsi, le procédé et le déflectomètre (1) peuvent être adaptés en termes de coût, de fonctionnalités et de performance.

## Revendications

1. Procédé de mesure sur un objet (2) réfléchissant ou un objet (2) transparent au moyen d'un déflectomètre (1) comprenant :
- un afficheur (10) de franges dynamiques ;
- une caméra (20) configurée pour acquérir des images des franges réfléchies par l'objet (2) réfléchissant et/ou des images des franges transmises à travers l'objet (2) transparent ;
- un ordinateur (30) configuré pour exécuter un programme afin d'effectuer la mesure à partir des images acquises par la caméra (20) ;
le procédé étant remarquable en ce qu'il comprend les étapes suivantes :
- acquisitions successives des images des franges réfléchies et/ou transmises par l'objet (2) dans au moins deux configurations d'un système optique défini par l'afficheur (10), l'objet (2) et la caméra (20) ;
- à partir des images acquises, exécution du programme et calcul des solutions possibles d'une forme de l'objet (2) et d'une position de l'objet (2) au sein du système optique défini par l'afficheur (10), l'objet (2) et la caméra (20), dans chacune des configurations ;
- obtention d'une solution finale de la forme et de la position de l'objet (2) par identification d'une unique solution commune aux solutions possibles préalablement calculées,
***caractérisé en* ce *qu'***on déplace la caméra (20), selon une translation axiale le long d'un axe optique de la caméra (20), entre les différentes acquisitions successives.

2. Procédé de mesure selon la revendication 1 ***caractérisé en ce qu'***il comprend une étape d'étalonnage du déflectomètre (1) par acquisitions successives des images des franges dans au moins deux configurations d'un système optique défini par l'afficheur (10) positionné directement face à la caméra (20).

3. Procédé de mesure selon la revendication 2 ***caractérisé en ce* que** l'étape d'étalonnage comprend une étape supplémentaire consistant à déplacer l'afficheur (10) et/ou la caméra (20) de manière qu'ils ne soient plus alignés, et à disposer un miroir de référence (3) de manière à réfléchir les projections de l'afficheur (10) en direction de la caméra (20).

4. Procédé de mesure selon la revendication 3 ***caractérisé en ce que*** la mesure du miroir de référence (3) est préalablement obtenue par un autre moyen tel qu'un interféromètre, et l'étape d'étalonnage comprend une étape supplémentaire consistant à mesurer le miroir de référence (3) au moyen du déflectomètre (1) afin de vérifier son bon fonctionnement, en comparant la mesure obtenue par le déflectomètre (1) avec la mesure préalable.

5. Déflectomètre (1) pour effectuer une mesure sur un objet (2) réfléchissant ou un objet (2) transparent comprenant :
- un afficheur (10) de franges dynamiques ;
- une caméra (20) configurée pour acquérir des images des franges réfléchies par l'objet (2) réfléchissant et/ou des images des franges transmises à travers l'objet (2) transparent ;
- un ordinateur (30) configuré pour exécuter un programme afin d'effectuer la mesure à partir des images acquises par la caméra (20) ;
***caractérisé en ce que*** la caméra (20) est montée sur un bâti (40) avec capacité de translation axiale le long d'un axe optique de la caméra (20),entre au moins deux positions, afin que la caméra (20) capte des images selon au moins deux configurations d'un système optique défini par l'afficheur (10), l'objet (2) et la caméra (20) ;
***et en ce que*** la mesure de l'objet (2) est un calcul de sa forme, le programme d'ordinateur est configuré pour calculer la géométrie de l'objet (2) uniquement à partir des images acquises par la caméra (20) dans les au moins deux configurations, et le calcul est fait par intégration des pentes mesurées dans chaque configuration,
***et en ce que*** la caméra (20) est montée sur le bâti (40) par une liaison isostatique.

6. Déflectomètre (1) selon la revendication 5, ***caractérisé en ce que*** le déplacement de la caméra (20) est assuré par un système à deux étages comprenant un premier étage (41) déplaçable par rapport au bâti (40), et transportant un second étage (42) sur lequel est fixée la caméra (20) ; le second étage (42) est escamotable entre :
- une position libre dans laquelle il n'entrave pas le déplacement du premier étage (41) par rapport au bâti (40), et
- une position indexée dans laquelle il entrave le déplacement du premier étage (41), et est en liaison isostatique avec le bâti (40).

7. Déflectomètre (1) selon l'une des revendications 5 à 6,
***caractérisé en ce que*** la liaison isostatique est du type liaison de Boys.

8. Déflectomètre (1) selon la revendication 7, ***caractérisé en ce que*** la liaison de Boys est réalisée par trois pions (43) à portion sphérique positionnés en triangle au niveau d'une face inférieure du second étage (42) en regard avec le bâti (40), chacun destiné à venir en appui entre deux faces interne d'un Vé (45) positionné de manière antagoniste au niveau d'une face supérieure du bâti (40).

9. Déflectomètre (1) selon la revendication 5, ***caractérisé en ce que*** l'afficheur (10) est déplaçable le long d'un axe rectiligne.

10. Déflectomètre (1) selon la revendication 9, ***caractérisé en ce que*** le déplacement de l'afficheur (10) et/ou de la caméra (20) est assuré par :
- une liaison glissière horizontale motorisée assurant le déplacement du premier étage (41) par rapport au bâti (40) ;
- une liaison glissière verticale motorisée permettant d'escamoter le second étage (42) entre la position libre et la position indexée, et la liaison glissière verticale est avec jeu.

11. Déflectomètre (1) selon la revendication 10, ***caractérisé en ce que*** les moteurs des liaisons glissières horizontale et verticale sont reliés à l'ordinateur (30), et le programme d'ordinateur est configuré pour piloter automatiquement les moteurs pour déplacer l'afficheur (10) et/ou la caméra (20) entre les positions.

## Patentansprüche

1. Verfahren zur Durchführung einer Messung an einem reflektierenden Objekt (2) oder einem transparenten Objekt (2) mittels eines Deflektometers (1), das umfasst:
- eine Anzeige (10), die dynamische Streifen darstellt;
- eine Kamera (20), die so konfiguriert ist, dass sie Bilder von den vom reflektierenden Objekt (2) reflektierten Streifen und/oder die Bilder von den durch das transparente Objekt (2) übertragenen Streifen aufnimmt;
- einen Computer (30), der so konfiguriert ist, ein Programm auszuführen, um die Messung auf Basis der von der Kamera (20) aufgenommenen Bilder durchzuführen; wobei das Verfahren **dadurch gekennzeichnet ist, dass** es die folgenden Schritte umfasst:
- sukzessive Aufnahme der von dem Objekt (2) reflektierten und/oder übertragenen Streifenbilder in mindestens zwei Konfigurationen eines optischen Systems, das durch die Anzeige (10), das Objekt (2) und die Kamera (20) definiert ist;
- basierend auf den aufgenommenen Bildern das Programm ausführen und mögliche Lösungen für die Form des Objekts (2) und die Position des Objekts (2) innerhalb des optischen Systems, das durch die Anzeige (10), das Objekt (2) und die Kamera (20) definiert ist, in jeder der Konfigurationen berechnen;
- eine endgültige Lösung für die Form und Position des Objekts (2) ermitteln, indem eine einzige Lösung identifiziert wird, die den zuvor berechneten möglichen Lösungen gemeinsam ist; **dadurch gekennzeichnet, dass** die Kamera (20) entlang einer optischen Achse der Kamera (20) zwischen sukzessiven Aufnahmen axial verschoben wird.

2. Messverfahren nach Anspruch 1, **dadurch gekennzeichnet, dass** es einen Schritt zur Kalibrierung des Deflektometers (1) umfasst, indem die Bilder von Streifen sukzessive in mindestens zwei Konfigurationen eines optischen Systems aufgenommen werden, das durch die Anzeige (10), die sich direkt gegenüber der Kamera (20) befindet, definiert ist.

3. Messverfahren nach Anspruch 2, **dadurch gekennzeichnet, dass** der Kalibrierschritt einen zusätzlichen Schritt umfasst, der darin besteht, die Anzeige (10) und/oder die Kamera (20) zu verschieben, sodass sie nicht mehr ausgerichtet sind, und einen Referenzspiegel (3) so zu platzieren, dass er die Projektionen der Anzeige (10) in Richtung der Kamera (20) reflektiert.

4. Messverfahren nach Anspruch 3, **dadurch gekennzeichnet, dass** die Messung des Referenzspiegels (3) zuvor mit einem anderen Mittel, wie einem Interferometer, durchgeführt wurde, und der Kalibrierschritt einen zusätzlichen Schritt umfasst, der darin besteht, den Referenzspiegel (3) mit dem Deflektometer (1) zu vermessen, um dessen korrekte Funktion zu überprüfen, indem die mit dem Deflektometer (1) erhaltene Messung mit der vorherigen Messung verglichen wird.

5. Deflektometer (1) zur Durchführung einer Messung an einem reflektierenden Objekt (2) oder einem transparenten Objekt (2), das umfasst:
- eine Anzeige (10), die dynamische Streifen darstellt;
- eine Kamera (20), die so konfiguriert ist, dass sie die Bilder von den vom reflektierenden Objekt (2) reflektierten Streifen und/oder die Bilder von den durch das transparente Objekt (2) übertragenen Streifen aufnimmt;
- einen Computer (30), der so konfiguriert ist, ein Programm auszuführen, um die Messung auf Basis der von der Kamera (20) aufgenommenen Bilder durchzuführen; **dadurch gekennzeichnet, dass** die Kamera (20) auf einem Rahmen (40) montiert ist und axial entlang einer optischen Achse der Kamera (20) zwischen mindestens zwei Positionen verschoben werden kann, sodass die Kamera (20) Bilder entsprechend mindestens zwei Konfigurationen eines optischen Systems aufnimmt, das durch die Anzeige (10), das Objekt (2) und die Kamera (20) definiert ist; und dass die Messung des Objekts (2) eine Berechnung seiner Form ist, wobei das Computerprogramm so konfiguriert ist, die Geometrie des Objekts (2) ausschließlich auf der Grundlage der von der Kamera (20) in den mindestens zwei Konfigurationen aufgenommenen Bilder zu berechnen, und die Berechnung durch Integration der in jeder Konfiguration gemessenen Neigungen erfolgt; und dass die Kamera (20) durch eine isostatische Verbindung auf dem Rahmen (40) montiert ist.

6. Deflektometer (1) nach Anspruch 5, **dadurch gekennzeichnet, dass** die Bewegung der Kamera (20) durch ein Zweistufensystem sichergestellt wird, das eine erste Stufe (41) umfasst, die relativ zum Rahmen (40) bewegt werden kann, und eine zweite Stufe (42) trägt, auf der die Kamera (20) befestigt ist; die zweite Stufe (42) ist zwischen:
- einer freien Position, in der sie die Bewegung der ersten Stufe (41) relativ zum Rahmen (40) nicht behindert, und
- einer indexierten Position, in der sie die Bewegung der ersten Stufe (41) behindert und isostatisch mit dem Rahmen (40) verbunden ist, zurückziehbar.

7. Deflektometer (1) nach einem der Ansprüche 5 bis 6, **dadurch gekennzeichnet, dass** die isostatische Verbindung vom Typ Boys-Verbindung ist.

8. Deflektometer (1) nach Anspruch 7, **dadurch gekennzeichnet, dass** die Boys-Verbindung durch drei kugelförmige Stifte (43) erreicht wird, die in einem Dreieck an einer unteren Fläche der zweiten Stufe (42) gegenüber dem Rahmen (40) positioniert sind, wobei jeder Stift an zwei Innenflächen eines gegenüber einer oberen Fläche des Rahmens (40) positionierten V (45) anliegt.

9. Deflektometer (1) nach Anspruch 5, **dadurch gekennzeichnet, dass** die Anzeige (10) entlang einer geradlinigen Achse bewegt werden kann.

10. Deflektometer (1) nach Anspruch 9, **dadurch gekennzeichnet, dass** die Bewegung der Anzeige (10) und/oder der Kamera (20) durch Folgendes sichergestellt wird:
- eine motorisierte horizontale Gleitverbindung, die die Bewegung der ersten Stufe (41) relativ zum Rahmen (40) sicherstellt;
- eine motorisierte vertikale Gleitverbindung, die es ermöglicht, die zweite Stufe (42) zwischen der freien Position und der indexierten Position zurückzuziehen, wobei die vertikale Gleitverbindung ein Spiel aufweist.

11. Deflektometer (1) nach Anspruch 10, **dadurch gekennzeichnet, dass** die Motoren der horizontalen und vertikalen Gleitverbindungen mit dem Computer (30) verbunden sind, und das Computerprogramm so konfiguriert ist, dass die Motoren automatisch gesteuert werden, um die Anzeige (10) und/oder die Kamera (20) zwischen den Positionen zu bewegen.

## Claims

1. Method for taking a measurement from a reflective object (2) or a transparent object (2) by means of a deflectometer (1) comprising:
- a display (10) displaying dynamic fringes;
- a camera (20) configured to acquire the images from fringes reflected by the reflective object (2) and/or the images from fringes transmitted through the transparent object (2);
- a computer (30) configured to run a program in order to perform the measurement based on the images acquired by the camera (20);
the method being **characterised in that** it comprises the following steps:
- successively acquiring the images from fringes reflected and/or transmitted by the object (2) in at least two configurations of an optical system defined by the display (10), the object (2) and the camera (20);
- based on the images acquired, running the program and calculating possible solutions for a shape of the object (2) and for a position of the object (2) within the optical system defined by the display (10), the object (2) and the camera (20), in each of the configurations;
- obtaining a final solution for the shape and for the position of the object (2) by identifying a single solution common to the previously calculated possible solutions ***characterized in that*** the camera (20) is displaced axially along an optical axis of the camera (20) between successive acquisitions.

2. Measuring method according to claim 1, ***characterised in that*** it comprises a step of calibrating the deflectometer (1) by successively acquiring the images from fringes in at least two configurations of an optical system defined by the display (10) positioned directly facing the camera (20).

3. Measuring method according to claim 2, ***characterised in that*** the calibration step comprises an additional step consisting of moving the display (10) and/or the camera (20), such that they are no longer aligned, and of placing a reference mirror (3) so as to reflect the projections from the display (10) in the direction of the camera (20).

4. Measuring method according to claim 3, ***characterised in that*** the measurement of the reference mirror (3) is previously obtained by another means such as an interferometer, and the calibration step comprises an additional step consisting of measuring the reference mirror (3) by means of the deflectometer (1), in order to verify its correct operation, by comparing the measurement obtained by the deflectometer (1) with the previous measurement.

5. Deflectometer (1) to take a measurement from a reflective object (2) or a transparent object (2) comprising:
- a display (10) displaying dynamic fringes;
- a camera (20) configured to acquire the images of fringes reflected by the reflective object (2) and/or the images of fringes transmitted through the transparent object (2);
- a computer (30) configured to run a program, in order to take the measurement based on the images acquired by the camera (20);
***characterised in that*** the camera (20) is mounted on a frame (40) with the capacity of axial translation along an optical axis of the camera (20) between at least two positions, such that the camera (20) captures images according to at least two configurations of an optical system defined by the display (10), the object (2) and the camera (20);
***and in that*** the measurement of the object (2) is a calculation of its shape, the computer program is configured to calculate the geometry of the object (2) only based on the images acquired by the camera (20) in the at least two configurations, and the calculation is made by integration of the slopes measured in each configuration,
***and in that*** the camera (20) is mounted on the frame (40) by an isostatic connection.

6. Deflectometer (1) according to claim 5, ***characterised in that*** the movement of the camera (20) is ensured by a two-stage system comprising a first stage (41) which can be moved with respect to the frame (40), and transporting a second stage (42) on which the camera (20) is fixed; the second stage (42) is retractable between:
- a free position wherein it does not impede the movement of the first stage (41) with respect to the frame (40), and
- an indexed position wherein it impedes the movement of the first stage (41), and is in isostatic connection with the frame (40).

7. Deflectometer (1) according to one of claims 5 to 6, ***characterised in that*** the isostatic connection is of the Boys connection type.

8. Deflectometer (1) according to claim 7, ***characterised in that*** the Boys connection is achieved by three spherical portion pins (43) positioned in a triangle at a lower face of the second stage (42) opposite the frame (40), each intended to bear against two internal faces of a V (45) positioned opposite an upper face of the frame (40).

9. Deflectometer (1) according to claim 5, ***characterised in that*** the display (10) can be moved along a rectilinear axis.

10. Deflectometer (1) according to claim 9, ***characterised in that*** the movement of the display (10) and/or of the camera (20) is ensured by:
- a motorised horizontal slide connection ensuring the movement of the first stage (41) with respect to the frame (40);
- a motorised vertical slide connection making it possible to retract the second stage (42) between the free position and the indexed position, and the vertical slide connection has a clearance.

11. Deflectometer (1) according to claim 10, ***characterised in that*** the motors of the horizontal and vertical slide connections are connected to the computer (30), and the computer program is configured to automatically control the motors to move the display (10) and/or the camera (20) between the positions.
